# FASCICULE DE BREVET EUROPEEN

(11) **EP 2 904 949 B1**
(45) Date de publication et mention de la délivrance du brevet: **30.11.2016**
(21) Numéro de dépôt: 15154365.9
(22) Date de dépôt: 09.02.2015
(51) Int. Cl.: A47J 27/08

(54) **Autocuiseur à trou d'homme à fermeture facilitée**
Schnellkochtopf mit Sichtfenster und vereinfachtem Verschluss
Pressure cooker with easy-closing inspection cover

(30) Priorité: 10.02.2014 FR 1451012
(43) Date de publication de la demande: 12.08.2015
(73) Titulaire: SEB S.A., 69130 Ecully (FR)
(72) Inventeur: Bodin, Pierre-Louis Georges Henri, 21000 Dijon (FR); Prado Neto, Adélio, 1009-000 Sao Paulo-SP (BR)
(74) Mandataire: Weber, Jean-François

(56) Documents cités:
- CH-A- 242 565
- CH-A- 461 737
- FR-A1- 2 796 541
- US-A- 2 549 243

## Description

La présente invention se rapporte au domaine technique général des autocuiseurs à trou d'homme (c'est à dire à couvercle rentrant) équipés d'une poignée de couvercle et d'une poignée de cuve destinées à être superposées pour permettre le verrouillage du couvercle sur la cuve.

La présente invention concerne plus précisément un autocuiseur à trou d'homme comprenant un couvercle rentrant, une poignée de couvercle attachée au couvercle par un bras flexible, ainsi qu'une cuve de cuisson équipée d'une poignée de cuve, ledit couvercle étant destiné à être verrouillé relativement à la cuve lorsque la poignée de couvercle est superposée à la poignée de cuve, ledit autocuiseur comprenant également un organe de guidage latéral solidaire de la cuve et conçu pour recevoir localement ledit bras lorsque le couvercle est rapporté dans la cuve en vue de son verrouillage.

Les autocuiseurs dits « à *trou d'homme »,* ou encore à couvercle rentrant, sont largement connus et présentent un certain nombre d'avantages relatifs notamment à leur simplicité et économie de fabrication, conduisant à la réalisation de produits particulièrement simples et bon marché.

Comme cela est bien connu, les autocuiseurs à trou d'homme sont des appareils de cuisson sous pression dont la cuve et le couvercle présentent chacun une forme légèrement ovalisée permettant au couvercle d'être inséré à l'intérieur de la cuve pour venir occuper, par l'intermédiaire d'un joint d'étanchéité et après rotation et mise en place du couvercle dans la cuve, une position de fermeture étanche dans laquelle le bord roulé du couvercle est à l'intérieur de la cuve, le joint d'étanchéité étant interposé entre le bord roulé et le bord rentrant périphérique de la cuve.

Afin de verrouiller le couvercle sur la cuve, les autocuiseurs à trou d'homme connus mettent généralement en oeuvre un dispositif d'accrochage permettant d'attacher l'extrémité de la poignée de couvercle à l'extrémité de la poignée de cuve.

Ainsi, pour fermer et verrouiller un tel autocuiseur, l'utilisateur met en place le couvercle rentrant dans la cuve puis, par rotation, vient superposer la poignée de couvercle avec la poignée de cuve, et enfin exerce une pression verticale sur la poignée de couvercle pour faire fléchir le bras flexible afin de permettre l'engagement d'une pièce d'accrochage équipant l'extrémité de la poignée de couvercle sur une butée correspondante équipant l'extrémité de la poignée de cuve.

Cette manipulation permet d'effectuer le verrouillage complet de l'autocuiseur, autorisant ce dernier à monter en pression.

Bien entendu, un positionnement adéquat du couvercle au moment de la manipulation de verrouillage décrite ci-avant est essentiel pour assurer la sécurité et l'étanchéité de l'ensemble cuve/couvercle.

Pour cela, l'utilisateur utilise la position relative des poignées de cuve et de couvercle comme un repère visuel lui permettant d'apprécier si le couvercle est correctement positionné relativement à la cuve lors de l'opération de verrouillage. En effet, le verrouillage étanche ne pourra s'opérer que si les poignées de cuve et de couvercle sont superposées.

Toutefois, ce repérage visuel s'avère en pratique insuffisant pour garantir à l'utilisateur que le couvercle se trouve bien en position adéquate pour le verrouillage.

En effet, il suffit que les poignées de cuve et de couvercle soient légèrement décalées angulairement, même de façon quasi-imperceptible à l'oeil, pour que cela contrarie le verrouillage correct du couvercle relativement à la cuve.

Afin de remédier à ce problème, il a été proposé de perfectionner les autocuiseurs connus décrits ci-avant en les dotant d'un dispositif permettant de faciliter l'alignement des poignées de cuve et de couvercle, par limitation du jeu latéral de la poignée de couvercle relativement à la poignée de cuve. Plus précisément, le dispositif en question se présente sous la forme d'une encoche ménagée à l'extrémité libre d'une patte rigide issue de la poignée de cuve.

Cette encoche est destinée à recevoir le bras flexible qui assure la liaison de la poignée de couvercle à ce dernier, afin d'empêcher le bras flexible de se décaler latéralement.

Un tel autocuiseur à trou d'homme amélioré permet ainsi de faciliter le bon positionnement du couvercle relativement à la cuve en vue de permettre à l'utilisateur d'obtenir aisément et rapidement un verrouillage correct du couvercle relativement à la cuve.

Un tel autocuiseur à trou d'homme amélioré n'en présente pas moins des inconvénients sérieux.

Ainsi, il peut arriver que la poignée de cuve et la poignée de couvercle, bien que correctement alignées grâce notamment au dispositif décrit précédemment, soient très légèrement décalées longitudinalement. Un tel décalage longitudinal, même très léger, est en pratique de nature à engendrer différentes situations dans lesquelles l'obtention d'un verrouillage correct est contrariée. Dans certaines situations, l'utilisateur pourra ainsi essayer en vain d'accrocher correctement les extrémités des poignées de cuve et de couvercle avec le verrou, et n'y parviendra pas, sans d'ailleurs forcément comprendre la raison de ce dysfonctionnement. L'utilisateur pourrait même dans ce cas être tenté d'exercer un effort inconsidéré de fléchissement de la poignée de couvercle qui risque de détériorer l'autocuiseur. Dans d'autres situations, l'utilisateur pourra éventuellement parvenir à attacher les poignées de cuve et de couvercle, mais l'étanchéité entre le couvercle et la cuve ne sera pas assurée du fait du décalage longitudinal du couvercle.

Dans tous les cas, le déficit d'ergonomie dont souffrent les appareils existants décrits ci-avant est de nature à entraîner des difficultés d'usage, ou encore une détérioration de l'autocuiseur, voire même des risques pour l'utilisateur.

Le document CH-242 565 décrit un autocuiseur conforme au préambule de la revendication 1.

Les objets assignés à l'invention visent en conséquence à porter remède aux différents inconvénients énumérés précédemment et à proposer un nouvel autocuiseur à trou d'homme dont l'ergonomie et la sécurité de fermeture sont grandement améliorées, et dont la conception extrêmement simple et bon marché limite les risques d'erreurs de positionnement du couvercle relativement à la cuve lors du verrouillage.

Un autre objet de l'invention vise à proposer un nouvel autocuiseur à trou d'homme dont la construction est particulièrement simple et robuste.

Un autre objet de l'invention vise à proposer un nouvel autocuiseur à trou d'homme qui, tout en étant d'une utilisation particulièrement intuitive, est facile et bon marché à fabriquer.

Un autre objet de l'invention vise à proposer un nouvel autocuiseur à trou d'homme particulièrement compact.

Un autre objet de l'invention vise à proposer un nouvel autocuiseur à trou d'homme qui facilite de manière très significative le positionnement du couvercle sur la cuve en vue de sa fermeture, tout en présentant un aspect et un mode d'utilisation très proches de ceux des autocuiseurs à trou d'homme classiques.

Les objets assignés à l'invention sont atteints à l'aide d'un autocuiseur à trou d'homme comprenant un couvercle rentrant, une poignée de couvercle attachée au couvercle par un bras flexible, ainsi qu'une cuve de cuisson équipée d'une poignée de cuve, ledit couvercle étant destiné à être verrouillé relativement à la cuve lorsque la poignée de couvercle est superposée à la poignée de cuve, ledit autocuiseur comprenant également un organe de guidage latéral solidaire de la cuve et conçu pour recevoir localement ledit bras lorsque le couvercle est rapporté dans la cuve en vue de son verrouillage, ledit autocuiseur étant caractérisé en ce qu'il comporte également un organe de verrouillage longitudinal solidaire de la cuve et en ce que ledit bras comporte une conformation de verrouillage, ledit organe de guidage latéral coopérant mécaniquement avec le bras, lorsqu'il reçoit ce dernier, pour autoriser ledit bras à glisser longitudinalement en appui contre ledit organe de guidage latéral tout en l'empêchant de se déporter latéralement, jusqu'à ce que ledit bras atteigne une position unique d'interverrouillage longitudinal dans laquelle ladite conformation de verrouillage peut venir interagir avec ledit organe de verrouillage longitudinal pour réaliser un interverrouillage longitudinal desdits bras et organe de verrouillage longitudinal empêchant ledit bras de glisser longitudinalement relativement à l'organe de guidage latéral.

D'autres particularités et avantages de l'invention apparaîtront et ressortiront plus en détails à la lecture de la description faite ci-après, en référence aux dessins annexés, donnés à titre d'exemples illustratifs et non limitatifs, dans lesquels :
- la figure 1 illustre, selon une vue de face, un autocuiseur à trou d'homme conforme à l'invention, qui se trouve dans une configuration préalable au verrouillage, selon laquelle le couvercle a été rapporté puis positionné dans la cuve en vue d'être ensuite amené dans une position permettant son verrouillage.
- La figure 2 est une vue en coupe de l'autocuiseur de la figure 1.
- La figure 3 est une vue de dessus de l'autocuiseur des figures 1 et 2.
- La figure 4 est une vue en perspective agrandie d'un détail des figures 1 à 3.
- La figure 5 est une vue agrandie en perspective du même détail que celui illustré par la figure 4, mais avec le bras flexible représenté cette fois en transparence.
- La figure 6 illustre, selon une vue de face, l'autocuiseur des figures 1 à 5 qui se trouve cette fois dans une configuration de verrouillage, dans laquelle le couvercle est verrouillé relativement à la cuve de façon à former avec cette dernière une enceinte de cuisson sensiblement étanche.
- La figure 7 est une vue en coupe de l'autocuiseur de la figure 6.
- La figure 8 illustre, selon une vue en perspective agrandie, un détail de réalisation de l'autocuiseur illustré aux figures 6 et 7.
- La figure 9 illustre, selon une vue en perspective, un détail de réalisation de l'autocuiseur des figures 1 à 8.
- La figure 10 illustre, selon une vue de dos, le détail de réalisation de la figure 9.
- La figure 11 illustre, selon une vue de face, le détail de réalisation des figures 9 et 10.

L'invention concerne un autocuiseur 1 à trou d'homme comprenant un couvercle rentrant 2, qui présente une forme générale sensiblement ovale et de préférence légèrement bombée. Dans l'exemple préférentiel illustré aux figures, le couvercle rentrant 2 comprend une paroi supérieure 2A sensiblement ellipsoïdale, laquelle présente un grand diamètre et un petit diamètre, et est de préférence sensiblement bombée. Le couvercle rentrant 2 comprend en outre un bord tombant 2B qui s'étend vers le bas à partir de la périphérie de la paroi supérieure 2A et se termine avantageusement par un bord roulé 2C qui forme un logement d'accueil pour un joint d'étanchéité annulaire 2D. Le joint d'étanchéité annulaire 2D enserre ainsi le bord tombant 2B, sur la face externe de ce dernier, tout en étant logé dans une rainure annulaire sensiblement périphérique formée par le bord roulé 2C, comme illustré aux figures. Le couvercle rentrant 2 est de préférence réalisé en un matériau métallique, tel que l'aluminium ou l'acier inoxydable.

Avantageusement, et comme cela est bien connu en tant que tel, des organes de gestion de la pression sont embarqués sur le couvercle 2. Par exemple, comme illustré aux figures, l'autocuiseur 1 comporte une soupape de régulation de pression 4, permettant de maintenir le niveau de la pression régnant au sein de l'autocuiseur 1 à une valeur de consigne prédéterminée. La soupape de régulation de pression 4 est par exemple une soupape « à *poids »* montée sur le couvercle 2, au centre de ce dernier, et comprend d'une part un conduit d'échappement qui s'étend selon l'axe central vertical X-X' du couvercle 2, et d'autre part un capuchon lesté rotatif emmanché sur le conduit. Bien entendu, l'invention n'est pas limitée à la mise en oeuvre d'une soupape à poids en tant que soupape de régulation de pression, et il est par exemple tout à fait envisageable de recourir à d'autres types de soupape (soupape à ressort par exemple) sans pour autant sortir du cadre de l'invention. Avantageusement, l'autocuiseur 1 comporte également une soupape de sécurité 5, qui se présente par exemple sous la forme d'une soupape à corps éjectable, et qui est montée avantageusement vers la périphérie du couvercle 2, sur ce dernier, comme illustré aux figures.

L'autocuiseur 1 comprend également une poignée de couvercle 3, réalisée avantageusement en matière plastique, et qui s'étend sensiblement radialement vers l'extérieur du couvercle 2.

Dans l'exemple préférentiel illustré aux figures, la poignée de couvercle 3 s'étend sensiblement selon la direction du grand diamètre du couvercle rentrant 2.

La poignée de couvercle 3 est attachée au couvercle 2 par un bras 6 flexible, qui est de préférence réalisé en un matériau métallique (acier ou aluminium par exemple) et est de façon particulièrement préférée formé par une lame ressort, comme illustré aux figures. La poignée de couvercle 3 est ainsi rendue solidaire du couvercle 2 par le bras 6 flexible, lequel s'étend longitudinalement, en l'espèce dans le prolongement de la poignée de couvercle 3, selon le grand diamètre du couvercle 2, entre une première extrémité avantageusement encastrée dans le corps même de la poignée de couvercle 3, de sorte que cette dernière forme dans ce cas un habillage qui entoure une portion extrémale libre du bras 6, et une seconde extrémité attachée, par exemple par vissage, soudure ou tout autre moyen, au couvercle 2, et plus précisément à la partie centrale de ce dernier, comme illustré aux figures. Ainsi, le couvercle rentrant 2, la poignée de couvercle 3 et le bras 6 flexible constituent un sous-ensemble unitaire indépendant qui présente globalement une forme de raquette avec un manche (le bras 6), une poignée (la poignée de couvercle 3) et un tamis (le couvercle 2).

Comme illustré aux figures, l'autocuiseur 1 comprend également une cuve de cuisson 7, qui est par exemple réalisée en un matériau métallique, du genre aluminium ou acier inoxydable. En l'espèce, la cuve de cuisson 7 comprend un fond 7A, destiné à reposer sur une source de chauffe externe, du genre plaque de cuisson, et à partir et la périphérie duquel s'élève sensiblement verticalement une paroi latérale annulaire 7B qui se termine par un bord rentrant 7C.

Le bord rentrant 7C, qui est en l'espèce formé par le repli vers l'intérieur de la portion extrémale libre de la paroi latérale 7B, surplombe le fond 7A et définit une ouverture de forme sensiblement ovale, complémentaire de la forme du couvercle 2. L'ouverture définie par le bord rentrant 7C présente ainsi une forme sensiblement ellipsoïdale, avec un petit diamètre et un grand diamètre respectivement conjugués aux petit et grand diamètres du couvercle 2. Le reste de la cuve 7 (fond 7A et paroi latérale annulaire 7B) présente quant à lui avantageusement une symétrie de révolution selon un axe vertical central Y-Y'.

De manière classique, la cuve de cuisson 7 est équipée d'une poignée de cuve 8, de préférence réalisée en matière plastique (par exemple un plastique thermodurcissable). La poignée de cuve 8 en question présente avantageusement une forme sensiblement allongée, et s'étend radialement relativement à la cuve 7. De façon préférentielle, comme illustré aux figures, ladite poignée de cuve 8 s'étend selon la direction du grand diamètre de l'ouverture ovale d'accès à l'intérieur de la cuve définie par le bord rentrant 7C de la cuve 7. La poignée de cuve 8 est avantageusement attachée à la paroi latérale annulaire 7B, par tout moyen approprié. Par exemple, la poignée de cuve 8 inclut une portion de préhension 8A, en matière plastique, destinée à être saisie manuellement, et une pièce de fixation 9, en matériau métallique, qui assure l'interface de liaison entre la cuve et la portion de préhension 8A. La pièce de fixation 9 se présente par exemple sous la forme d'une platine en acier inoxydable ou en aluminium, attachée par vissage (ou tout autre moyen) à la portion de préhension 8A et fixée par tout moyen approprié (vissage, soudage, rivetage, etc.) à la paroi latérale 7B de la cuve 7.

Ainsi, dans l'exemple préférentiel illustré aux figures, lesdites poignées de couvercle 3 et de cuve 8 présentent toutes deux une forme allongée, longiligne.

De préférence, comme illustré aux figures, l'autocuiseur 1 comprend, outre la poignée de couvercle 3, qui constitue en l'espèce la poignée principale, une oreille de préhension 14, qui forme une poignée secondaire disposée avantageusement de façon diamétralement opposée à la poignée de cuve 8. Avantageusement, cette oreille de préhension 14 ne présente pas, contrairement à la poignée de cuve 8 illustrée aux figures, un caractère allongé, mais se présente au contraire sous la forme d'un élément relativement large et peu profond destiné à être saisi manuellement, par exemple avec la main gauche, tandis que la poignée de cuve 8 est quant à elle destinée à être enserrée par l'autre main (par exemple la main droite).

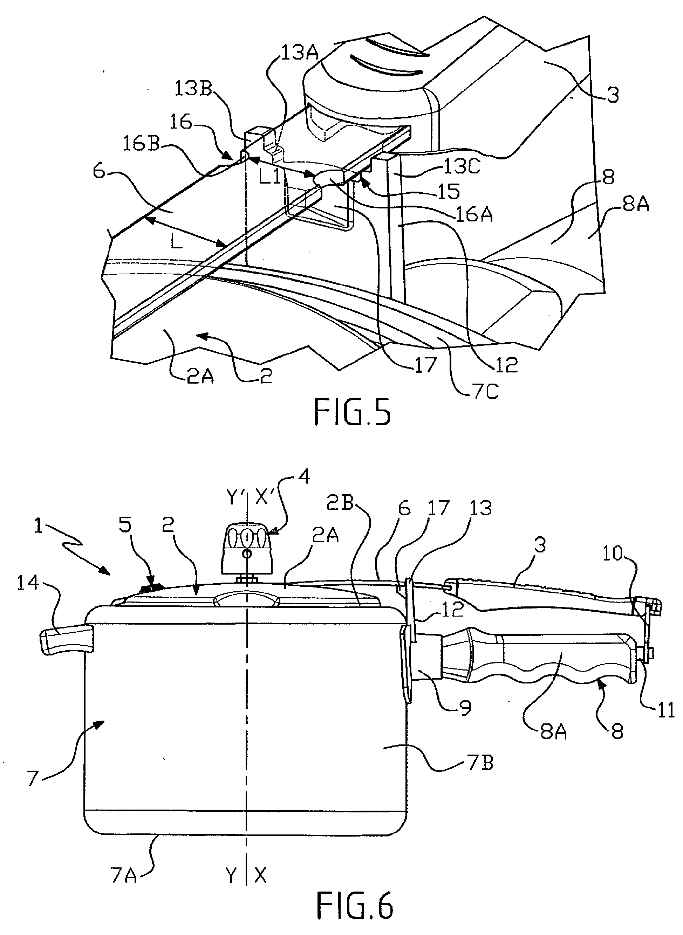

Comme cela est bien connu en tant que tel et comme illustré aux figures 6 à 8, le couvercle 2 est destiné à être verrouillé sur la cuve 7 lorsque la poignée de couvercle 3 est superposée à la poignée de cuve 8.

A cette fin, l'autocuiseur 1 conforme à l'invention comporte avantageusement des moyens de verrouillage/déverrouillage du couvercle 2 sur la cuve 7, lesdits moyens de verrouillage/déverrouillage étant avantageusement portés par les poignées de couvercle 3 et de cuve 8, qui assurent donc une double fonction (préhension et verrouillage). Par exemple, lesdits moyens de verrouillage/déverrouillage comprennent :
- une boucle 10 attachée à pivotement sur la poignée de couvercle 3, à l'extrémité libre de cette dernière,
- et un plot d'amarrage 11 attaché à la poignée de cuve 8, de façon à s'étendre à partir de l'extrémité libre de ladite poignée de cuve 8, dans la continuité de cette dernière (comme illustré aux figures).

Selon le mode de réalisation préférentiel illustré aux figures, l'organe de guidage latéral 13 est distinct des moyens de verrouillage/déverrouillage 10, 11. En d'autres termes, l'organe de guidage latéral 13 et lesdits moyens de verrouillage/déverrouillage 10, 11 sont indépendants et séparés les uns des autres.

Les moyens de verrouillage/déverrouillage en question sont agencés de façon à permettre l'opération de verrouillage suivante :
- Une fois les poignées de couvercle 3 et de cuve 8 superposées, lesdites poignées 3,8 sont soumises à un effort de pression manuelle permettant de les rapprocher l'une de l'autre, ce qui est permis notamment par la déflexion élastique du bras 6, jusqu'à permettre l'engagement du plot 11 dans la boucle 10.
- Une fois le plot 11 capturé dans la boucle 10, la pression manuelle de rapprochement des poignées peut cesser, ce qui entraîne un retour élastique vers le haut de la poignée de couvercle 3, permettant à la boucle 10 solidaire de la poignée de couvercle 3 d'exercer en permanence un effort sur le plot 11, ledit effort contribuant à garantir l'engagement du plot 11 dans la boucle 10.

Afin de limiter tout risque de désengagement intempestif de la boucle 10 et du plot 11, ce dernier est avantageusement pourvu d'une gorge circulaire destinée à accueillir la boucle 10, comme cela ressort des figures.

Afin de procéder au déverrouillage, il suffit à l'utilisateur d'exercer à nouveau un effort manuel de rapprochement des poignées de couvercle 3 et de cuve 8, de façon à relâcher l'effort exercé par la boucle 10 sur le plot 11 et ainsi permettre à l'utilisateur d'agir sur la boucle 11 en vue de la faire légèrement pivoter pour la désengager du plot 11.

Bien évidemment, l'invention n'est absolument pas limitée à des moyens de verrouillage/déverrouillage formés par un ensemble boucle/plot comme décrit ci-avant. Il est par exemple tout à fait envisageable, sans pour autant qu'on sorte du cadre de l'invention, que les moyens de verrouillage/déverrouillage comprennent plutôt une came liée à la poignée de couvercle et une butée liée à la poignée de cuve, de façon que la came et la butée puissent être verrouillées lorsque les poignées sont simplement pressées l'une contre l'autre.

En tout état de cause, il est particulièrement préféré de recourir à un moyen de verrouillage/déverrouillage utilisant notamment la faculté de déflexion du bras 6, et les propriétés de retour élastique qui en découlent, pour mettre en oeuvre le verrouillage/déverrouillage.

Avantageusement, l'autocuiseur 1 comprend un support 12 solidaire de la cuve 7 (par exemple attaché à la pièce de fixation 9) et contre lequel ledit bras 6 flexible est destiné à venir en appui lorsque le couvercle 2 est rapporté dans la cuve 8 en vue de son verrouillage. La présence du support 12 permet en particulier de procurer un effet de levier permettant de venir plaquer le joint d'étanchéité 2D contre la face interne du bord rentrant 7C. Le recours à un support 12 formant un point d'appui pour le bras 6 flexible afin de générer un effet de levier n'est toutefois pas obligatoire, même s'il est préféré, et il est par exemple tout à fait envisageable que l'autocuiseur 1 en soit dépourvu, sans pour autant que l'on sorte du cadre de l'invention. Avantageusement, ledit support 12 forme avec la poignée de cuve 8 un sous-ensemble unitaire attaché à la cuve 7. De préférence, le support 12 vient de matière avec la pièce de fixation 9, de façon à former avec cette dernière une pièce d'un seul tenant, de préférence entièrement métallique (acier inoxydable ou aluminium par exemple). Comme illustré aux figures, le support 12 qui est avantageusement formé par une patte rigide, s'étend de préférence verticalement, en l'espèce parallèlement à la paroi latérale 7B, entre une extrémité inférieure attachée à la cuve 7 et une extrémité supérieure libre, située par exemple à une altitude sensiblement supérieure à celle de l'ouverture ovale de la cuve 7, pour procurer l'effet de levier évoqué ci-avant.

Ainsi, dans le mode de réalisation préférentiel illustré aux figures, la poignée de cuve 8 s'étend entre une première extrémité attachée à la cuve 7 et une deuxième extrémité libre (qui porte en l'occurrence le plot 11), l'extrémité inférieure du support 12 étant en l'occurrence raccordée à la poignée de cuve 8, au niveau de la première extrémité de celle-ci. De préférence, le support 12 est fixé, avantageusement directement, à la cuve 7, par exemple par vissage ou rivetage du support 12 à la paroi latérale 7B.

Conformément à l'invention, l'autocuiseur 1 comprend également un organe de guidage latéral 13 solidaire de la cuve 7 et conçu pour recevoir localement le bras 6 flexible lorsque le couvercle 2 est rapporté dans la cuve 7 en vue de son verrouillage. Le rôle de l'organe de guidage latéral 13 est de faciliter la mise en malignement, par l'utilisateur, de la poignée de couvercle 3 avec la poignée de cuve 8, c'est-à-dire d'éviter ou de limiter tout décalage angulaire éventuel, dans le plan horizontal, entre les poignées de couvercle 3 et de cuve 8. Avantageusement, l'organe de guidage latéral 13 coopère mécaniquement avec le bras 6, lorsqu'il reçoit ce dernier, pour autoriser ledit bras 6 à glisser longitudinalement (c'est à dire en l'espèce selon une direction parallèle à la direction longitudinale d'extension de la poignée de cuve 8), en appui contre ledit organe de guidage latéral 13, tout en l'empêchant de se déporter latéralement, afin d'éviter tout désalignement. De préférence, comme illustré aux figures, ledit organe de guidage latéral 13 est formé par une première encoche ménagée dans le support 12 au niveau de l'extrémité libre de ce dernier, pour former un premier fond 13A, de préférence sensiblement horizontal, à partir et de chaque côté duquel s'élève deux premiers montants latéraux 13B, 13C. Comme illustré aux figures, le bras flexible 6 repose sur l'organe de guidage latéral 13 lorsqu'il est reçu par ce dernier. En d'autres termes, ledit bras 6 est supporté librement sur l'organe de guidage latéral 13 lorsque ledit organe de guidage latéral 13 reçoit ledit bras flexible 6. Plus précisément, dans le mode de réalisation avantageux illustré aux figures, ledit organe de guidage latéral 13 se présente sous la forme d'un premier siège destiné à recevoir localement le bras 6. Ledit premier siège est globalement en forme de U, avec d'une part un fond (premier fond 13A) correspondant à l'âme du U, contre et sur lequel ledit bras flexible 6 vient en appui lorsqu'il est reçu par ledit organe de guidage latéral 13, et d'autre part des ergots latéraux (premiers montants latéraux 13B, 13C) correspondants au bras du U et destiné à encadrer latéralement le bras flexible pour l'empêcher de se déporter latéralement tout en l'autorisant à glisser longitudinalement en appui sur le fond. Afin de procurer le guidage latéral recherché, l'écartement D1 entre lesdits ergots latéraux formant respectivement lesdits premiers montants latéraux 13B, 13C est très légèrement supérieur à la largeur L du bras 6 (formé en l'espèce par une lame ressort), tandis que la hauteur H1 desdits premiers montants latéraux 13B, 13C est sensiblement supérieure ou égale à l'épaisseur E du bras 6. Le bras 6 est ainsi reçu de façon ajustée entre les premiers montants latéraux 13A, 13B. L'organe de guidage latéral 13 se présente ainsi avantageusement sous la forme d'un premier siège dont la forme (qui est en l'espèce concave) est sensiblement complémentaire de celle du bras 6, de sorte que l'utilisateur peut intuitivement aligner de façon précise les poignées de couvercle 3 et de cuve 8 en rapportant simplement le bras 6 dans et contre le premier siège formant l'organe de guidage latéral 13.

Conformément à l'invention, l'autocuiseur 1 comporte également un organe de verrouillage longitudinal 15 solidaire de la cuve 7. Le rôle de l'organe de verrouillage longitudinal 15 est de faciliter l'obtention d'un positionnement longitudinal adéquat (permettant le verrouillage étanche du couvercle 2 relativement à la cuve 7) de la poignée de couvercle 3. En d'autres termes, alors que l'organe de guidage latéral 13 permet de faciliter l'alignement des poignées de couvercle 3 et de cuve 8, l'organe de verrouillage longitudinal 15 permet quant à lui de faciliter le positionnement de la poignée de couvercle 3 selon la direction longitudinale qui est en espèce parallèle à la direction du grand diamètre de l'ouverture ovale ménagée par le bord rentrant 7C de la cuve 7.

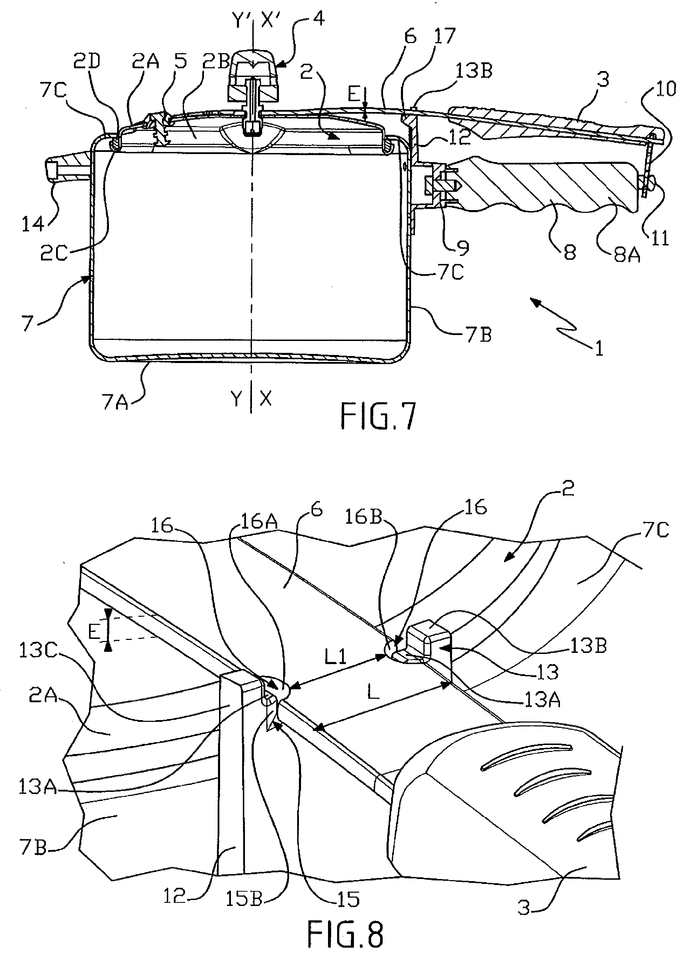

Comme illustré aux figures, le bras 6 comporte par ailleurs une conformation de verrouillage 16 destinée à coopérer avec l'organe de verrouillage longitudinal 15, en vue d'obtenir le verrouillage du couvercle 2 relativement à la cuve 7. Conformément à l'invention, l'organe de guidage latéral 13 coopère mécaniquement avec le bras 6, lorsqu'il reçoit ce dernier, pour autoriser ledit bras 6 à glisser longitudinalement en appui contre l'organe de guidage latéral 13 tout en l'empêchant de se déporter latéralement, jusqu'à ce que ledit bras 6 atteigne une position unique (illustrée à la figure 8) d'interverrouillage longitudinal dans laquelle ladite conformation de verrouillage 16 peut venir interagir (par exemple sous l'effet d'un rapprochement mutuel des poignées 3, 8 opéré manuellement) avec ledit organe de verrouillage longitudinal 15 pour réaliser un interverrouillage longitudinal desdits bras 6 et organe de verrouillage longitudinal 15 empêchant ledit bras 6 de glisser longitudinalement relativement à l'organe de guidage latéral 13.

En d'autres termes, l'autocuiseur 1 selon l'invention est avantageusement conçu pour permettre la séquence de verrouillage préférée suivante :
- l'utilisateur saisit la poignée de couvercle 3 et introduit ce dernier dans la cuve 7 ;
- l'utilisateur rapporte ensuite le bras 6 flexible contre le premier siège formant l'organe de guidage latéral 13 ;
- puis l'utilisateur fait glisser longitudinalement le bras 6 en appui contre l'organe de guidage latéral 13 (lequel empêche le bras 6 de se déporter latéralement) jusqu'à ce que le bras 6 atteigne ladite position unique d'interverrouillage ; dans cette position, le bras 6 a la faculté de pouvoir se déplacer (par exemple vers le bas) jusqu'à venir engager l'organe de verrouillage longitudinal 15 pour bloquer tout glissement longitudinal du bras 6, qui se trouve alors dans une position adaptée au verrouillage du couvercle 2 relativement à la cuve 8.

Avantageusement, le support 12 forme à la fois l'organe de guidage latéral 13 et l'organe de verrouillage longitudinal 15. Plus précisément, l'extrémité supérieure libre du support 12 est avantageusement conformée pour former à la fois l'organe de guidage latéral 13 et l'organe de verrouillage longitudinal 15.

Avantageusement, l'organe de verrouillage longitudinal 15 est formé par une deuxième encoche réalisée au niveau du premier fond 13A de l'organe de guidage latéral 13, pour former un deuxième fond 15A, de préférence sensiblement horizontal, à partir duquel s'élèvent deux seconds montants latéraux 15B, 15C. En d'autres termes, l'organe de verrouillage longitudinal 15 se présente tout simplement dans ce cas sous la forme d'une découpe du premier fond 13A de l'organe de guidage latéral 13, découpe qui permet d'obtenir en l'espèce un organe de verrouillage longitudinal 15 se présentant sous la forme d'un deuxième siège globalement en forme de U, avec d'une part un fond (deuxième fond 15A) correspondant à l'âme du U contre et sur lequel ledit bras 6 flexible est destiné à venir en appui et d'autre part des ergots latéraux (seconds montants latéraux 15B, 15C) correspondants aux bras du U.

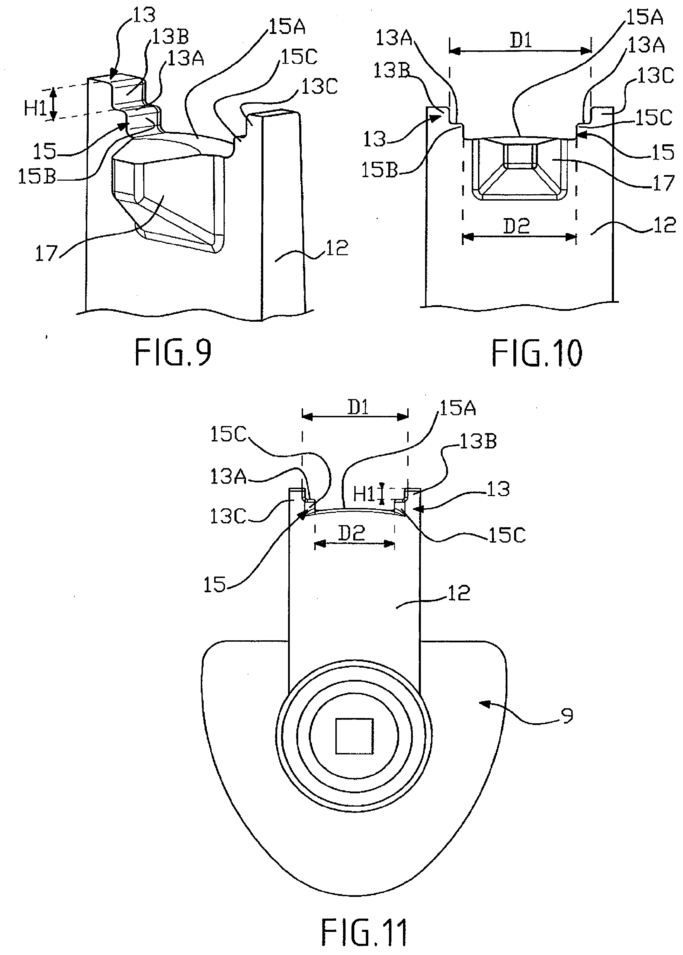

Ainsi, l'extrémité libre de la patte rigide formant le support 12 comporte avantageusement une zone centrale plane (correspondant au deuxième fond 15A) à chaque extrémité de laquelle s'élèvent, de façon symétrique et divergente, deux bordures en escalier, avec chacune une première marche correspondant aux seconds montants 15B, 15C et une seconde marche correspond aux premiers montants 13B, 13C (cf. figures 9 à 11).

Avantageusement, la conformation de verrouillage 16 est quant à elle formée par au moins une échancrure 16A (et en l'espèce de préférence deux échancrures 16A, 16B) ménagée dans le bras 6 flexible. De préférence, ladite au moins une échancrure 16A est formée par une découpe localisée de l'un des bords latéraux du bras 6 (formé en l'espèce par une lame ressort). Dans le mode de réalisation préférentiel illustré aux figures, la conformation de verrouillage 16 est formée par deux échancrures 16A, 16B correspondants respectivement à des découpes symétriques de chacun des bords latéraux du bras 6. Les échancrures 16A, 16B en question sont disposées en regard l'une de l'autre, de façon que le bras 6 présente, au niveau desdites échancrures 16A, 16B, une largeur réduite L1. L'organe de verrouillage longitudinal 15 comprend dans ce cas quant à lui au moins une protubérance (et en l'espèce deux protubérances, une par échancrure) destinée à pénétrer dans ladite échancrure 16A, 16B lorsque la conformation de verrouillage 16 interagit avec ledit organe de verrouillage longitudinal 15, pour réaliser ainsi ledit interverrouillage longitudinal. De préférence, au moins l'un desdits ergots latéraux correspondants aux bras du U du deuxième siège évoqué ci-avant forme ladite au moins une protubérance 16A, 16B. Dans le mode de réalisation illustré aux figures, chacun desdits ergots latéraux précités forme respectivement une protubérance destinée à venir se loger respectivement dans chacune des deux échancrures 16A, 16B ménagées de manière symétrique sur les bords latéraux de la lame ressort formant le bras 6. De préférence, la forme de chacun desdits ergots latéraux en question et celle des échancrures correspondantes 16A, 16B sont sensiblement conjugués. Par exemple, les échancrures peuvent présenter une forme de découpe arrondie, avec un profil en arc de cercle, tandis que les ergots latéraux présentent eux aussi une forme arrondie sensiblement complémentaire de celle des découpes correspondantes formant les échancrures 16A, 16B. Dans ce mode de réalisation préférentiel, la distance D2 séparant chacun desdits seconds montants latéraux 15B, 15C (formés en l'espèce par lesdits ergots latéraux qui forment en l'espèce chacune des protubérance 16A, 16B) est très légèrement supérieure à la largeur localement réduite L1 du bras 6 flexible, de façon à permettre l'insertion ajustée dudit bras 6, au niveau de cette portion de largeur réduite L1, dans le second siège formant avantageusement l'organe de verrouillage longitudinal 15. Ainsi, le bras 6 flexible ne peut être reçu dans le second siège, c'est à dire venir en appui contre le fond 15A de ce dernier, que si sa portion de largeur réduite L1 se trouve en regard, c'est à dire au droit, dudit second siège, avec les échancrures 16A, 16B positionnées au droit des protubérances correspondantes formées respectivement par les seconds montants latéraux 16A, 16B. Cette mise en correspondance de la portion de largeur réduite L1 du bras 6 avec le second siège (en l'espèce de forme concave) formant avantageusement l'organe de verrouillage longitudinal 15 permet d'insérer localement le bras 6 flexible entre lesdits montants latéraux 16A, 16B, ce qui a pour effet de verrouiller en position le bras 6 relativement au support 12. Dans cette position, le verrouillage du couvercle 2 relativement à la cuve 8 peut alors être opéré en engageant le plot 11 dans la boucle 10, comme exposé auparavant. Afin de faciliter le guidage et la stabilité du contact entre le bras 6 flexible et le support 12, ce dernier est avantageusement muni, dans le prolongement du deuxième fond 15A, d'une rampe de support 17 qui forme une surface d'appui complémentaire sensiblement horizontale qui s'étend à partir du support en direction du centre de l'autocuiseur 1.

L'invention permet ainsi, de manière extrêmement simple, pratique et bon marché, de faciliter de manière très significative le positionnement adéquat du couvercle 2 relativement à la cuve 8 en vue du verrouillage dudit couvercle 2. En outre, dans le mode de réalisation particulièrement avantageux illustré aux figures, l'agencement de l'organe de guidage latéral 13 et de l'organe de verrouillage longitudinal 15 donnent à l'utilisateur des repères visuels particulièrement pratiques pour s'assurer d'un seul regard du positionnement adéquat du couvercle 2 relativement à la cuve 8 en vue du verrouillage.

Le fonctionnement de la variante illustré aux figures est le suivant.

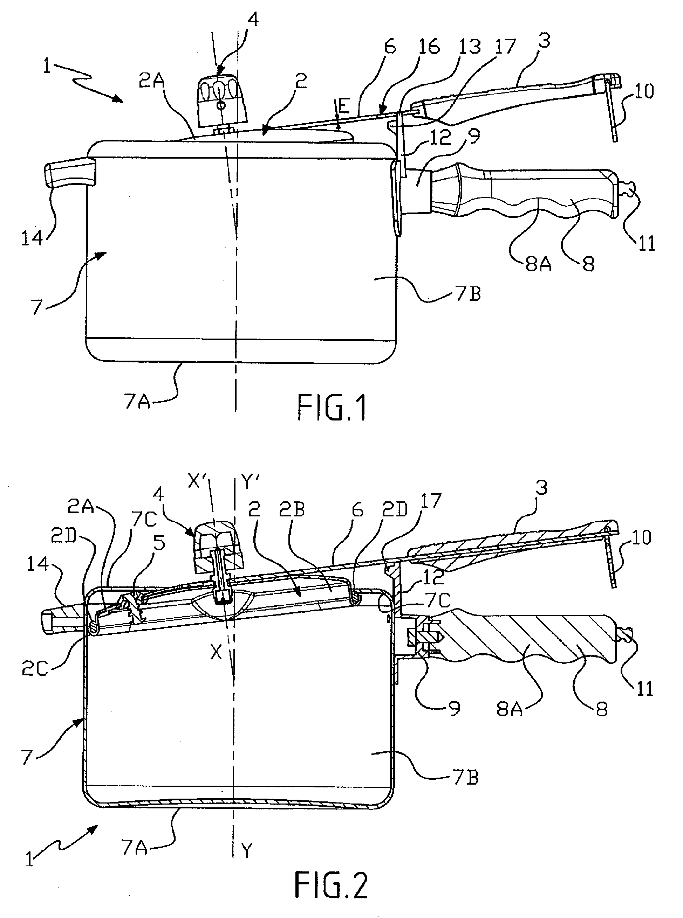

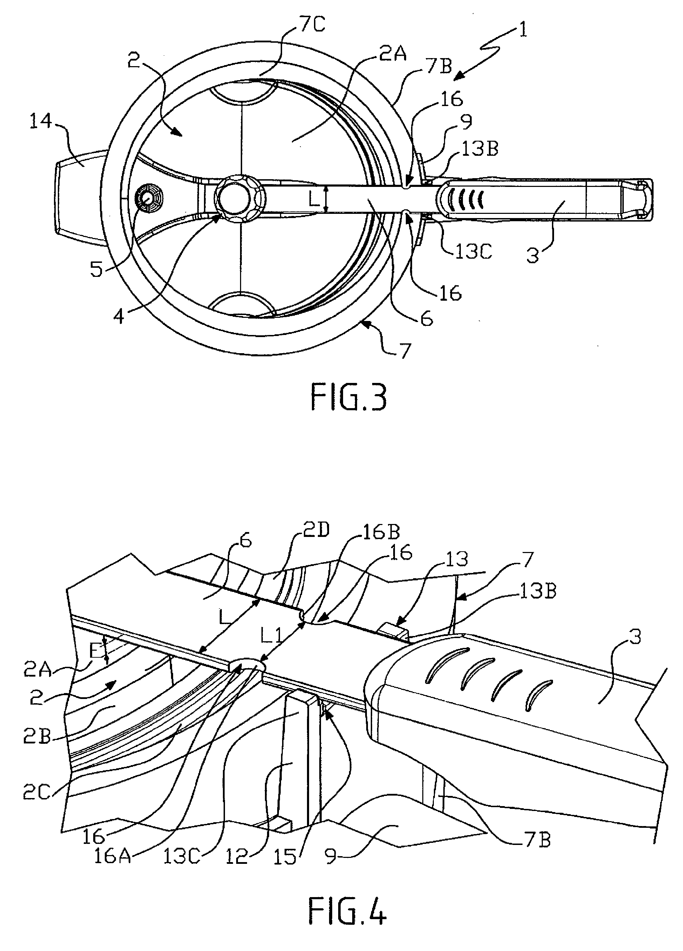

Dans un premier temps, l'utilisateur insère le couvercle 2 au sein de la cuve 7, en manipulant ledit couvercle 2 au moyen de la poignée de couvercle 3. L'utilisateur engage alors le bras 6 flexible dans le premier siège formant l'organe de guidage latéral 13. L'autocuiseur 1 se trouve alors dans une configuration qui peut être par exemple celle illustrée aux figures 1 à 5. L'utilisateur n'a ensuite plus qu'à faire glisser le bras 6 contre et le long dudit premier siège, en exerçant une traction sur la poignée de couvercle 3, jusqu'à amener les échancrures 16A, 16B au droit du support 12. Dans cette configuration, le bras 6 peut alors descendre pour être localement être reçu dans le second siège formant l'organe de verrouillage longitudinal 15, avec les montants latéraux 15B, 15C engageant respectivement chacune des échancrures comme illustré notamment aux figures 6 à 8. L'utilisateur, voyant que les ergots latéraux formant lesdits montants latéraux 15B, 15C sont insérés dans les échancrures respectives 16A, 16B ménagées dans le bras 6 flexible, sait alors que les poignées de couvercle 3 et de cuve 8 se trouvent dans une position relative adéquate pour le verrouillage. L'utilisateur peut donc presser lesdites poignées 3, 8 l'une contre l'autre de façon à pouvoir faire coopérer la boucle 10 et le plot 11. L'utilisateur n'a alors plus qu'à relâcher sa pression sur les poignées pour obtenir un autocuiseur verrouillé conformément à la configuration illustrée aux figures 6 à 8. Dans cette configuration, le joint annulaire 2D est pressé verticalement contre le bord rentrant 7C de la cuve 7, de façon à réaliser un contact étanche entre le couvercle 2 et la cuve 7 qui permet la montée en pression de l'autocuiseur 1.

Bien entendu, la séquence en deux temps (positionnement selon la figure 5 puis glissement du bras 6 jusqu'à atteindre le positionnement de la figure 8) décrite ci-avant n'est absolument pas obligatoire, et la conception de l'autocuiseur 1 selon l'invention autorise bien entendu un utilisateur le positionnement direct du bras 6 dans le second siège formant l'organe de verrouillage longitudinal 15.

L'invention permet ainsi de conférer à l'autocuiseur 1 un caractère particulièrement ergonomique et intuitif, qui améliore le confort et la sécurité d'utilisation de l'autocuiseur en limitant les risques de mauvais positionnement du couvercle 2 relativement à la cuve 7 lors de l'opération de fermeture et de verrouillage de l'autocuiseur 1.

## Revendications

1. - Autocuiseur (1) à trou d'homme comprenant un couvercle rentrant (2), une poignée de couvercle (3) attachée au couvercle (2) par un bras (6) flexible, ainsi qu'une cuve de cuisson (7) équipée d'une poignée de cuve (8), ledit couvercle (2) étant destiné à être verrouillé relativement à la cuve (7) lorsque la poignée de couvercle (3) est superposée à la poignée de cuve (8), ledit autocuiseur (1) étant **caractérisé en ce qu'**il comprend également un organe de guidage latéral (13) solidaire de la cuve (7) et conçu pour recevoir localement ledit bras (6) lorsque le couvercle (2) est rapporté dans la cuve (7) en vue de son verrouillage, ledit autocuiseur (1) comportant également un organe de verrouillage longitudinal (15) solidaire de la cuve (7) et **en ce que** ledit bras (6) comporte une conformation de verrouillage (16), ledit organe de guidage latéral (13) coopérant mécaniquement avec le bras (6), lorsqu'il reçoit ce dernier, pour autoriser ledit bras (6) à glisser longitudinalement en appui contre ledit organe de guidage latéral (13) tout en l'empêchant de se déporter latéralement, jusqu'à ce que ledit bras (6) atteigne une position unique d'interverrouillage longitudinal dans laquelle ladite conformation de verrouillage (16) peut venir interagir avec ledit organe de verrouillage longitudinal (15) pour réaliser un interverrouillage longitudinal desdits bras (6) et organe de verrouillage longitudinal (15) empêchant ledit bras (6) de glisser longitudinalement relativement à l'organe de guidage latéral (13).

2. - Autocuiseur (1) selon la revendication 1 **caractérisé en ce que** ledit bras (6) est formé par une lame ressort.

3. - Autocuiseur (1) selon la revendication 1 ou 2 **caractérisé en ce qu'**il comprend un support (12) solidaire de la cuve (7) et contre lequel ledit bras (6) est destiné à venir en appui lorsque le couvercle (2) est rapporté dans la cuve (8) en vue de son verrouillage, ledit support (12) formant à la fois l'organe de guidage latéral (13) et l'organe de verrouillage longitudinal (15).

4. - Autocuiseur (1) selon la revendication 3 **caractérisé en ce que** ledit support (12) est formé par une patte rigide.

5. - Autocuiseur (1) selon la revendication 3 ou 4 **caractérisé en ce que** ledit support (12) forme avec la poignée de cuve (8) un sous-ensemble unitaire attaché à la cuve (7).

6. - Autocuiseur (1) selon l'une des revendications 3 à 5 **caractérisé en ce que** ledit support (12) s'étend verticalement entre une extrémité inférieure attachée à la cuve et une extrémité supérieure libre qui est conformée pour former à la fois l'organe de guidage latéral (13) et l'organe de verrouillage longitudinal (15).

7. - Autocuiseur (1) selon les revendications 5 et 6 **caractérisé en ce que** ladite poignée de cuve s'étend entre une première extrémité attachée à la cuve et une deuxième extrémité libre, ladite extrémité inférieure du support (12) étant raccordée à la poignée de cuve (8) au niveau de la première extrémité de celle-ci.

8. - Autocuiseur (1) selon la revendication 7 **caractérisé en ce que** ledit organe de guidage latéral (13) est formé par une première encoche ménagée dans ledit support (12) au niveau de l'extrémité libre de ce dernier pour former un premier fond (13A) à partir et de chaque côté duquel s'élèvent deux premiers montants latéraux (13B, 13C).

9. - Autocuiseur (1) selon la revendication 8 **caractérisé en ce que** ledit organe de verrouillage longitudinal (15) est formé par une deuxième encoche réalisée au niveau du premier fond (13A) pour former un deuxième fond (15A) à partir duquel s'élèvent deux second montants latéraux (15B, 15C).

10. -Autocuiseur (1) selon l'une des revendications 1 à 9 **caractérisé en ce que** ledit organe de guidage latéral (13) se présente sous la forme d'un premier siège globalement en forme de U, avec d'une part un fond correspondant à l'âme du U, contre et sur lequel ledit bras (6) flexible vient en appui lorsqu'il est reçu par ledit organe de guidage latéral (13), et d'autre part des ergots latéraux correspondant aux bras du U et destinés à encadrer latéralement le bras flexible (6) pour l'empêcher de se déporter latéralement tout en l'autorisant à glisser longitudinalement en appui sur le fond.

11. - Autocuiseur (1) selon l'une des revendications 1 à 10 **caractérisé en ce que** ladite conformation de verrouillage (16) est formée par au moins une échancrure (16A, 16B) ménagée dans ledit bras (6) flexible, tandis que ledit organe de verrouillage longitudinal (15)comprend au moins une protubérance destinée à pénétrer dans ladite échancrure (16A, 16B) lorsque la conformation de verrouillage interagit avec ledit organe de verrouillage longitudinal (15), pour réaliser ainsi ledit interverrouillage longitudinal.

12. -Autocuiseur (1) selon la revendication 11 **caractérisé en ce que** ledit organe de verrouillage longitudinal (15) se présente sous la forme d'un deuxième siège globalement en forme de U, avec d'une part un fond correspondant à l'âme du U contre et sur lequel ledit bras (6) flexible est destiné à venir en appui et d'autre part des ergots latéraux correspondant aux bras du U, au moins l'un desdits ergots latéraux formant ladite au moins une protubérance (16A, 16B).

13. -Autocuiseur (1) selon l'une des revendications précédentes **caractérisé en ce qu'**il comporte des moyens de verrouillage/déverrouillage (10, 11) du couvercle (2) sur la cuve (7), lesdits moyens de verrouillage/déverrouillage (10, 11) étant avantageusement portés par les poignées de couvercle (3) et de cuve (8).

14. -Autocuiseur (1) selon l'une des revendications précédentes **caractérisé en ce que** l'organe de guidage latéral (13) est distinct desdits moyens de verrouillageldéverrouillage (10, 11).

15. -Autocuiseur (1) selon l'une des revendications précédentes **caractérisé en ce que** le bras (6) repose sur l'organe de guidage latéral (13) lorsqu'il est reçu par ce dernier.

## Patentansprüche

1. - Schnellkochtopf (1) mit Sichtfenster, umfassend einen Eindrückdeckel (2), einen Deckelgriff (3), der durch einen flexiblen Arm (6) an dem Deckel (2) befestigt ist, und einen Kochbehälter (7), der mit einem Behältergriff (8) ausgestattet ist, wobei der Deckel (2) dazu bestimmt ist, bezüglich des Behälters (7) verriegelt zu werden, wenn der Deckelgriff (3) auf dem Behältergriff (8) überlagert ist, wobei der Schnellkochtopf (1) **dadurch gekennzeichnet ist, dass** er auch ein seitliches Führungsorgan (13) aufweist, das mit dem Behälter (7) fest verbunden ist und ausgebildet ist, um lokal den Arm (6) aufzunehmen, wenn der Deckel (2) für sein Verriegeln in den Behälter (7) eingesetzt ist, wobei der Schnellkochtopf (1) auch ein Längsverriegelungsorgan (15) aufweist, das mit dem Behälter (7) fest verbunden ist, und dass der Arm (6) eine Verriegelungsanordnung (16) aufweist, wobei das seitliche Führungsorgan (13) mechanisch mit dem Arm (6) zusammenwirkt, wenn es diesen Letzteren aufnimmt, um dem Arm (6) zu ermöglichen, in Längsrichtung in Anlage gegen das seitliche Führungsorgan (13) zu gleiten und ihn dabei gleichzeitig daran zu hindern, sich seitlich zu verschieben, bis der Arm (6) eine einzige Position der Längsverriegelung erreicht, in der die Verriegelungsanordnung (16) mit dem Längsverriegelungsorgan (15) interagieren kann, um ein Längsverriegeln der Arme (6) und des Längsverriegelungsorgans (15) zu bewirken, das den Arm (6) daran hindert, in Längsrichtung bezüglich des seitlichen Führungsorgans (13) zu gleiten.

2. - Schnellkochtopf (1) nach Anspruch 1, **dadurch gekennzeichnet, dass** der Arm (6) durch ein Federblatt gebildet ist.

3. - Schnellkochtopf (1) nach Anspruch 1 oder 2, **dadurch gekennzeichnet, dass** er einen Träger (12) aufweist, der mit dem Behälter (7) fest verbunden ist und gegen den der Arm (6) bestimmt ist, in Anlage zu kommen, wenn der Deckel (2) für sein Verriegeln in den Behälter (2) eingesetzt ist, wobei der Träger (12) gleichzeitig das seitliche Führungsorgan (13) und das Längsverriegelungsorgan (15) bildet.

4. - Schnellkochtopf (1) nach Anspruch 3, **dadurch gekennzeichnet, dass** der Träger (12) durch eine starre Lasche gebildet ist.

5. - Schnellkochtopf (1) nach Anspruch 3 oder 4, **dadurch gekennzeichnet, dass** der Träger (12) mit dem Behältergriff (8) eine einheitliche Unteranordnung bildet, die an dem Behälter (7) befestigt ist.

6. - Schnellkochtopf (1) nach einem der Ansprüche 3 bis 5, **dadurch gekennzeichnet, dass** sich der Träger (12) vertikal zwischen einem unteren Ende, das an dem Behälter befestigt ist, und einem freien oberen Ende erstreckt, das ausgebildet ist, um gleichzeitig das seitliche Führungsorgan (13) und das Längsverriegelungsorgan (15) zu bilden.

7. - Schnellkochtopf (1) nach den Ansprüchen 5 und 6, **dadurch gekennzeichnet, dass** sich der Behältergriff zwischen einem ersten Ende, das an dem Behälter befestigt ist, und einem zweiten freien Ende erstreckt, wobei das untere Ende des Trägers (12) mit dem Behältergriff (8) an dem ersten Ende von diesem verbunden ist.

8. - Schnellkochtopf (1) nach Anspruch 7, **dadurch gekennzeichnet, dass** das seitliche Führungsorgan (13) durch eine erste Kerbe gebildet ist, die in dem Träger (12) an dem freien Ende von diesem Letzteren gebildet ist, um einen ersten Boden (13A) zu bilden, ausgehend von dem und auf jeder Seite von dem sich zwei erste seitliche Streben (13B, 13C) erheben.

9. - Schnellkochtopf (1) nach Anspruch 8, **dadurch gekennzeichnet, dass** das Längsverriegelungsorgan (15) durch eine zweite Kerbe gebildet ist, die an dem ersten Boden (13A) gebildet ist, um einen zweiten Boden (15A) zu bilden, ausgehend von dem sich zwei zweite seitliche Streben (15B, 15C) erheben.

10. - Schnellkochtopf (1) nach einem der Ansprüche 1 bis 9, **dadurch gekennzeichnet, dass** das seitliche Führungsorgan (13) die Form eines ersten im Wesentlichen U-förmigen Sitzes aufweist, mit einerseits einem Boden, der dem Kern des U entspricht, gegen den und auf dem der flexible Arm (6) in Anlage kommt, wenn er von dem seitlichen Führungsorgan (13) aufgenommen wird, und andererseits seitlichen Spornen, die den Armen des U entsprechen und dazu bestimmt sind, seitlich den flexiblen Arm (6) einzurahmen, um ihn daran zu hindern, sich seitlich zu verschieben und ihm dabei gleichzeitig zu ermöglichen, in Längsrichtung in Anlage auf dem Boden zu gleiten.

11. - Schnellkochtopf (1) nach einem der Ansprüche 1 bis 10, **dadurch gekennzeichnet, dass** die Verriegelungsanordnung (16) aus mindestens einer Ausnehmung (16A, 16B) gebildet ist, die in dem flexiblen Arm (6) angeordnet ist, während das Längsverriegelungsorgan (15) mindestens eine Protuberanz aufweist, die dazu bestimmt ist, in die Ausnehmung (16A, 16B) einzudringen, wenn die Verriegelungsanordnung mit dem Längsverriegelungsorgan (15) interagiert, um auf diese Weise die gegenseitige Längsverriegelung zu bewirken.

12. - Schnellkochtopf (1) nach Anspruch 11, **dadurch gekennzeichnet, dass** Längsverriegelungsorgan (15) die Form eines zweiten im Wesentlichen U-förmigen Sitzes aufweist, mit einerseits einem Boden, der dem Kern des U entspricht, gegen den und auf dem der flexible Arm (6) bestimmt ist, in Anlage zu kommen, und andererseits seitlichen Spornen, die den Armen des U entsprechen, wobei mindestens einer der seitlichen Sporne mindestens eine Protuberanz (16A, 16B) bildet.

13. - Schnellkochtopf (1) nach einem der vorhergehenden Ansprüche, **dadurch gekennzeichnet, dass** er Verriegelungs-/Entriegelungsmittel (10, 11) des Deckels (2) auf dem Behälter (7) aufweist, wobei die Verriegelungs /Entriegelungsmittel (10, 11) vorteilhafterweise von den Deckelgriffen (3) und den Behältergriffen (8) getragen sind.

14. - Schnellkochtopf (1) nach einem der vorhergehenden Ansprüche, **dadurch gekennzeichnet, dass** das seitliche Führungsorgan (13) von den Verriegelungs /Entriegelungsmitteln (10, 11) getrennt ist.

15. - Schnellkochtopf (1) nach einem der vorhergehenden Ansprüche, **dadurch gekennzeichnet, dass** der Arm (6) auf dem seitlichen Führungsorgan (13) ruht, wenn es von diesem Letzteren aufgenommen ist.

## Claims

1. - A manhole pressure cooker (1) comprising an internal-mount lid (2), a lid handle (3) fastened to the lid (2) via a flexible arm (6), and a cooking vessel (7) equipped with a vessel handle (8), said lid (2) being intended for being locked relative to the vessel (7) when the lid handle (3) is superposed on the vessel handle (8), said pressure cooker (1) being **characterized in that** it further comprises a lateral guide member (13) secured to the vessel (7) and designed to receive said arm (6) locally when the lid (2) is mounted in the vessel (7) with a view to being locked, said pressure cooker (1) further comprising a longitudinal locking member (15) secured to the vessel (7), and **in that** said arm (6) is provided with a locking shaped portion (16), said lateral guide member (13) co-operating mechanically with the arm (6), when it receives the latter, to allow said arm (6) to slide longitudinally while said arm is bearing against said lateral guide member (13) while also preventing it from being offset laterally, until said arm (6) reaches a unique longitudinal interlocking position in which said locking shaped portion (16) can come to interact with said longitudinal locking member (15) to interlock said arm (6) and said longitudinal locking member (15) longitudinally, thereby preventing said arm (6) from sliding longitudinally relative to the lateral guide member (13).

2. - A pressure cooker (1) according to claim 1, **characterized in that** said arm (6) is formed by a spring blade.

3. - A pressure cooker (1) according to claim 1 or claim 2, **characterized in that** it further comprises a support (12) that is secured to the vessel (7) and against which said arm (6) is intended for coming to bear when the lid (2) is mounted in the vessel (8) with a view to being locked, said support (12) forming both the lateral guide member (13) and the longitudinal locking member (15).

4. - A pressure cooker (1) according to claim 3, **characterized in that** said support (12) is formed by a rigid tab.

5. - A pressure cooker (1) according to claim 3 or claim 4, **characterized in that** said support (12) co-operates with the vessel handle (8) to form a one-piece subassembly fastened to the vessel (7).

6. - A pressure cooker (1) according to any one of claims 3 to 5, **characterized in that** said support (12) extends vertically between a bottom end fastened to the vessel and a free top end that is shaped to form both the lateral guide member (13) and the longitudinal locking member (15).

7. - A pressure cooker (1) according to claims 5 and 6, **characterized in that** said vessel handle extends between a first end fastened to the vessel and a free second end, said bottom end of the support (12) being connected to the vessel handle (8) at the first end thereof.

8. - A pressure cooker (1) according to claim 7, **characterized in that** said lateral guide member (13) is formed by a first setback provided in said support (12) at the free end thereof so as to form a first bottom (13A) from and at either of end of which two first lateral uprights (13B, 13C) extend upwards.

9. - A pressure cooker (1) according to claim 8, **characterized in that** said longitudinal locking member (15) is formed by a second setback provided at the first bottom (13A) so as to form a second bottom (15A) from which two second lateral uprights (15B, 15C) extend upwards.

10. - A pressure cooker (1) according to any one of claims 1 to 9, **characterized in that** said lateral guide member (13) is in the form of a first seat that has generally a "U" shape with, firstly a bottom corresponding to the web of the "U" shape, against which and on which said flexible arm (6) comes to bear when it is received by said lateral guide member (13), and secondly lateral projections corresponding to the flanges of the "U" shape and designed to flank the flexible arm (6) laterally to prevent it from being offset laterally, while also allowing it to slide longitudinally while it is bearing against the bottom.

11. - A pressure cooker (1) according to any one of claims 1 to 10, **characterized in that** said locking shaped portion (16) is formed by at least one notch (16A, 16B) provided in said flexible arm (6), while said longitudinal locking member (15) has at least one protuberance intended for penetrating into said notch (16A, 16B) when the locking shaped portion interacts with said longitudinal locking member (15), thereby achieving said longitudinal interlocking.

12. - A pressure cooker (1) according to claim 11, **characterized in that** said longitudinal locking member (15) has the form of a second seat that has generally a "U" shape with, firstly a bottom corresponding to the web of the "U" shape , against which and on which said flexible arm (6) is intended for coming to bear, and secondly lateral projections corresponding to the flanges of the "U" shape , at least one of said lateral projections forming said at least one protuberance (16A, 16B).

13. - A pressure cooker (1) according to any one of previous claims, **characterized in that** it includes locking / unlocking means (10, 11) for locking / unlocking the lid (2) on the vessel (7), said locking/ unlocking means (10, 11) advantageously being carried by the lid handle (3) and by the vessel handle (8).

14. - A pressure cooker (1) according to any one of previous claims **characterized in that** the lateral guide member (13) is distinct from the locking/unlocking means (10, 11).

15. - A pressure cooker (1) according to any one of previous claims **characterized in that** when the lateral guide member (13) receives the arm (6), said arm (6) rests onto said lateral guide member (13).
